# EUROPÄISCHE PATENTSCHRIFT

(11) **EP 0 734 009 B1**
(45) Veröffentlichungstag und Bekanntmachung des Hinweises auf die Patenterteilung: **07.07.2004**
(21) Anmeldenummer: 96104185.2
(22) Anmeldetag: 15.03.1996
(51) Int. Cl.: G09G 3/36, H02M 3/156

(54) **Schaltung zur Erzeugung einer einstellbaren Ausgangsgleichspannung mit einem über einer Eingangsspannung liegenden Wert, insbesondere zur Verwendung bei der Bereitstellung von Kontrastspannungen für Flüssigkristallanzeigen**
Circuit for generating an adjustable output voltage higher than the input voltage, especially for providing contrast voltages in a liquid crystal display
Circuit pour la génération d'une tension de sortie réglable plus grande que la tension d'entrée, notamment pour la fourniture de tension de contraste pour des dispositifs d'affichage à cristaux liquides

(30) Priorität: 20.03.1995 DE 19510049
(43) Veröffentlichungstag der Anmeldung: 25.09.1996
(73) Patentinhaber: SIEMENS AKTIENGESELLSCHAFT, 80333 München (DE)
(72) Erfinder: Rieger, Gottfried, Dipl.-Ing (FH), 90765 Fürth (DE)

(56) Entgegenhaltungen:
- EP-A- 0 262 739
- EP-A- 0 593 257
- DE-A- 4 021 385
- US-A- 4 687 956
- "DIGITAL CONTRAST AND BRIGHTNESS CONTROLS FOR A LIQUID CRYSTAL DISPLAY" IBM TECHNICAL DISCLOSURE BULLETIN, Bd. 36, Nr. 10, 1.Oktober 1993, Seiten 395-397, XP000412306

## Beschreibung

Schaltung zur Erzeugung einer einstellbaren Ausgangsgleichspannung mit einem über einer Eingangsspannung liegenden Wert, insbesondere zur Verwendung bei der Bereitstellung von Kontrastspannungen für Flüssigkristallanzeigen

In manchen Anwendungsfällen der Schaltungstechnik wird eine einstellbare Gleichspannung benötigt, deren Wert größer ist als der Wert z.B. einer allgemein verfügbaren Versorgungs- bzw. Eingangsgleichspannung. Als eine hierfür geeignete Grundschaltung sind sogenannte Aufwärtsregler bekannt. Derartige Schaltungen sind z.B. aus den Aufsätzen in Elektor, Juli/August 1986, Seiten 32,33 und Elektor 7-8, 1989, Seiten 92,93 bekannt. Eine weitere, mit "Boast converter" bezeichnete Schaltung dieser Art ist aus der EP 0 593 257 A2 bekannt.

Der Erfindung liegt die Aufgabe zugrunde eine auf dem Prinzip eines Aufwärtsreglers beruhende Schaltung so zu verbessern, daß hiermit eine flexible Vorgabe eines jeweils benötigten Wertes einer Ausgangsgleichspannung in einem möglichst großen Spannungsbereich und gegebenenfalls mit einem positiven und/oder negativen Vorzeichen möglich ist.

Die Aufgabe wird gelöst mit der im Anspruch 1 angegebenen Schaltung. Vorteilhafte Ausführungsformen und ein bevorzugte Verwendung derselben sind in den Unteransprüchen angegeben.

Die Erfindung wird anhand der nachfolgend kurz angeführten Figuren näher erläutert. Dabei zeigt .
- Fig.1: ein grundlegendes Blockschaltbild der erfindungsgemäßen Schaltung,
- Fig.2: eine um einen negativen Abgriff ergänzte Ausführung der Schaltung von Figur 1 und
- Fig.3: eine um weitere Teile ergänzte Ausführung der Schaltung von Figur 2.

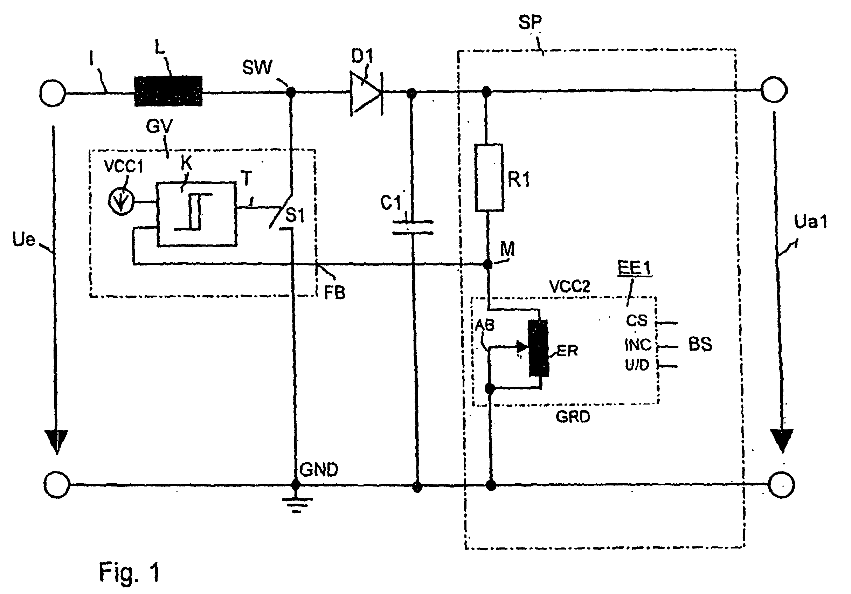

Gemäß der Darstellung in Figur 1 weist die erfindungsgemäße Schaltung als Grundkomponenten ein getaktetes Schaltelement S1, eine Induktivität L, eine Freilauf-Diode D1 und einen Speicherkondensators C1 auf. Diese Elemente sind auch in der bekannten Aufwärtsreglerschaltung zu finden. Ist das Schaltelement S1 geschlossen, fließt der Strom I über die Induktivität L und S1. Wird das Schaltelement S1 geöffnet, fließt der Strom I durch die Spule L weiter über die Diode D1 und lädt den Kondensator C1 auf. Beim Öffnen des Schaltelements S1 entsteht eine Induktionsspannung über L, die größer ist als die Eingangsspannung Ue. Auf deren, um die Flußspannung der Diode D1 reduzierten Wert lädt sich der Kondensator C1 auf. Wird das Schaltelement S1 im richtigen Moment wieder geschlossen, fließt der Strom I wieder über das Schaltelement S1. Die Diode D1 verhindert nun eine Entladung des Kondensators C1 über das Schaltelement S1, so daß der erreichte, erhöhte Wert der positiven Ausgangsgleichspannung Ua1 quasi eingefroren wird.

Diese Grundschaltung enthält weitere Komponenten. Eine erste dieser Komponenten ist ein Spannungsteiler SP am Schaltungsausgang. Über eine Veränderung von dessen Widerstandsverhältnis kann vorteilhaft eine Ausgangsgleichspannung Ua1 mit vorgebbarem Wert erzeugt werden. Hierzu kann entweder der zwischen dem positiven Potential der Ausgangsgleichspannung Ua1 und dem Mittenpunkt M des Spannungsteilers SP liegende obere Widerstand, im Beispiel der Figur 1 der Widerstand R1, oder der zwischen dem Mittenpunkt M des Spannungsteilers SP und dem negativen Potential der Ausgangsgleichspannung Ua1 liegende untere Widerstand verändert werden. Wird eine Änderung des oberen Widerstands bewirkt, steigt die Ausgangsgleichspannung Ua1 mit steigendem Widerstandswert linear an. Wird eine Änderung über den unteren Widerstand bewirkt, kehrt sich das Verhältnis um. Eine Verkleinerung bzw. Vergrößerung des unteren Widerstandes führt zu einer Erhöhung bzw. Verringerung der Ausgangsgleichspannung Ua1.

Es ist nun für die Erfindung wesentlich, daß als eine weitere Komponente ein sogenanntes elektronisches Potentiometer als einer der beiden Widerstände im Spannungsteiler SP eingesetzt wird. Elemente dieser Art sind beschrieben in der G 91 14 033.1 und der DE 33 31 200 C2. Hiermit kann eine positive Ausgangsgleichspannung Ua1 mit einstellbarem Wert erzielt werden. Wie im Beispiel der Figur 1 dargestellt, wird im Spannungsteiler SP bevorzugt der zwischen dem Mittenpunkt M und dem negativen Potential der Ausgangsgleichspannung Ua1 liegende untere Widerstand durch ein elektronisches Potentiometers EE1 veränderlich vorgegeben. Ein Ansteigen des Widerstandswertes von EE1 hat demnach ein Absinken der Ausgangsgleichspannung Ua1, eine Widerstandsverminderung von EE1 ein Ansteigen von Ua1 zur Folge. Die Breite des einstellbaren Bereiches kann durch Dimensionierung des Widerstandes R1 entsprechend beeinflußt werden.

Elektronische Potentiometer, welche auch als EEPot oder E²Pot bezeichnet werden, verfügen im wesentlichen über drei Funktionseinheiten. Eine Busschnittstelle BS, einen internen Speicher und eine einstellbare elektronische Widerstandsstufe ER mit einem "Mittenabgriff" AB. In dem meist programmierbaren Speicher wird ein den aktuellen Widerstandswert bestimmender Zählerstand verwaltet. Als Steuereingänge sind an der Busschnittstelle BS häufig die mit CS, U/D und INC bezeichneten Signale vorhanden. Mit dem Aktivierungsbit CS kann ein bestimmtes von gegebenenfalls mehreren adressierbaren elektronischen Potentiometern selektiert werden. Nur wenn das Bit aktiv ist, läßt sich eine Veränderung des Widerstandswertes des Potentiometers erreichen. Mit dem Steuerbit U/D wird die Zählrichtung der internen Zählstufe festgelegt, d.h. ob der Widerstandswert erhöht oder erniedrigt werden soll. Der Zähler eines elektronischen Potentiometers hat kein sogenanntes "Wrap-around", so daß dieser durch entsprechend häufiges Takten bei Erreichen des oberen oder unteren Grenzwertes fest an diesem ansteht. Hierdurch wird ein Umschlagen des Zählers vermieden, d.h. nach Erreichen des höchsten Zählwerts ein Umspringen auf den niedrigsten Zählwert oder umgekehrt. Dadurch hat ein Programm die Möglichkeit, über die Busschnittstelle BS eindeutige Werte einzustellen. Mit dem Steuertakt INC wird der eigentlichen Zählvorgang in die eingestellte Richtung ausgeführt und es verändert sich damit der Wert des Potentiometers. Steht der Zähler am Ende, bewirkt das INC-Signal keine weitere Werteänderung, d.h. der minimale oder maximale Wert bleibt erhalten. Häufig verfügen elektronische Potentiometer über Zähler mit z.B. 32 oder 100 Stufen. Das bedeutet, daß ein maximaler Widerstandswert in 32 oder 100 Teilbereiche aufgeteilt ist. Elektronische Potentiometer können lineare oder logarithmische Teilung aufweisen. Bei linearen elektronische Potentiometern verändert sich der Widerstandswert immer um denselben Betrag, während bei logarithmischen eine exponentielle Skalierung realisiert ist. Dabei nimmt der Widerstandswert mit steigendem Zählerstand um jeweils größere Beträge zu. Ein elektronisches Potentiometer wird meist in Form einer inetrierten Schaltung ausgeführt, welche wie ein mechanisches Potentiometer an drei Stellen kontaktierbar ist. Gemäß der Darstellung im Beispiel der Figur 1 sind zum einen die Enden des einstellbaren elektronischen Widerstands ER zugänglich, an denen der Gesamtwiderstand abgegriffen werden kann. Zusätzlich ist ein Mittenabgriff AB herausgeführt. An diesem kann ein Teilwiderstand abgegriffen werden, dessen Wert vom aktuellen Stand des Zählers bestimmt wird. Vereinfacht dargestellt wird die dem Zählerstand entsprechende Anzahl an Teilwiderständen addiert und über den Mittenabgriff nach außen geführt. Eine Veränderung des Zählerwertes bewirkt eine softwaregesteuerte "Verschiebung" des Mittenabgriffs AB und somit eine Widerstandsänderung.

Als weitere Komponente ist bei der erfindungsgemäßen Schaltung ein Schaltregler GV vorhanden. Hiermit ist die Konstanthaltung eines über den Spannungsteiler SP mit dem elektronischen Potentiometer EE1 vorgegebenen aktuellen Wertes der Ausgangsgleichspannung Ua1 möglich. Dies wird erreicht durch eine Rückführung FB des aktuellen Wertes der Ausgangsgleichspannung Ua1 auf einen Meßwerteingang des Schaltreglers GV. Dieser weist bevorzugt einen internen Komparator K und eine Referenzspannungsquelle VCC1 auf. Liegt der Wert der Ausgangsgleichspannung innerhalb eines Schwellwertbereiches des Komparators K, bleibt das Schaltelement S1 geöffnet. Sinkt die Ausgangsgleichspannung Ua1 unter den Schwellwertbereich des Komparators K, wird der Schaltelement S1 mit einem Steuersignal T getaktet, so daß die Ladeinduktivität L abwechselnd mit dem Massebezugpunkt verbunden wird. Das Schaltelement wird zyklisch solange geöffnet und geschlossen, bis die Ausgangsgleichspannung Ua1 wieder den ursprünglichen Wert erreicht hat. Vorteilhaft wird als Schaltregler GV ein integriertes Bauelement eingesetzt, welches alle notwendigen Elemente beinhaltet, insbesondere eine Referenzspannungsquelle VCC1, einen Komparators K, ein gesteuerts Schaltelement S1 und Mittel zur Erzeugung einer Schaltfrequenz T zum Betrieb des Schaltelements S1.

Der Einsatz eines elektronischen Potentiometers EE1 im Spannungsteiler SP in Kombination mit der Rückführung über den Schaltregler GV stellt die wesentliche Leistung der Erfindung dar. Bei elektronischen Potentiometern muß nämlich zur Vermeidung einer Zerstörung derselben streng darauf geachtet werden, daß die Spannung an deren Ausgang nur geringfügig über dem Wert von deren Versorgungsspannung VCC2 liegt, welche üblicherweise einen Wert von +5 V aufweist. Aufgrund dieser Eigenschaften ist es eigentlich nicht möglich, dieses Bauelement entsprechend Figur 1 am Ausgang einer Schaltung einzusetzen, bei der Ausgangsgleichspannungen im Wertebereich von + 15 bis zu + 30 Volt auftreten. Ein stabiler, zerstörungsfreier Dauerbetrieb des elektronischen Potentiometers EE1 wird in der erfindungsgemäßen Schaltung von Figur 1 dadurch ermöglicht, daß die am Mittenpunkt M des Spannungsteilers SP auftretende Ausgangsspannung des elektronischen Potentiometers EE durch Rückführung über den Meßwerteingang des Schaltreglers GV auf unschädliche Werte stabilisiert wird. So ist es durch den Einsatz dieses für den vorliegenden Anwendungsfall an sich nicht vorgesehenen Bauelements mit der erfindungsgemäßen Schaltung von Fig. 1 möglich, Ausgangsgleichspannungen zu erreichen, deren Werte weit über der Zulässigkeitsgrenze eines elektronischen Potentiometers liegen, und dennoch dessen besonders vorteilhafte, programmtechnische Einstellbarkeit auszunutzen.

Die erfindungsgemäße Schaltung ist besonders geeignet für die Generierung von unterschiedlichen Kontrastspannungen für Flüssigkristallanzeigen ( desweiteren als "LCD Display" bezeichnet ). Die Schaltung hat dabei insbesondere den Vorteil, daß eine rein programmgesteuerte Einstellung der Kontrastspannung für Displays unterschiedlichsten Typs ohne mecha- . nische Potentiometer oder sonstige Einstellungen von einem definierten Ausgangspunkt aus über die Busschnittstelle BS möglich ist. Die erfindungsgemäße Schaltung wird..desweiteren an diesem Beispiel des Einsatzes zur Erzeugung von Kontrastspannungen für Flüssigkristallanzeigen erläutert. Sie kann aber auch anderweitig eingesetzt werden, z.B. bei zur Stromversorgung dienenden Geräten, und somit andere Verbraucher speisen.

Für den Betrieb von z.B. passiven Flüssigkristallanzeigen ( desweiteren als "LCD Display" bezeichnet ) werden verschiedene Spannungen benötigt, insbesondere eine Gleichspannung zum Betrieb der Ansteuerungsschaltung und eine sogenannte Kontrastspannung für das LCD Display zur Beeinflussung von dessen Lesbarkeit. Die allgemein zur Verfügung stehende Betriebsspannung ist in den meisten Anwendungen gleich der Spannung für die Ansteuerungsschaltung. In den meisten Fällen werden für LCD's +5V als Betriebsspannung benötigt und direkt an der Ansteuerungsschaltung angeschlossen. Mit der Kontrastspannung kann der Bediener individuell die Lesbarkeit des Displays beeinflussen, welche im wesentlichen von seiner aktuellen Position zum Display abhängt, d.h. von dem für ihn optimalen Ablesewinkel. Diese Spannung muß gegebenenfalls auch in Abhängigkeit von Umgebungsbedingungen, insbesondere der Umgebungstemperatur, nachgestellt werden. Der Wert der für passive LCDs notwendigen Kontrastspannung ist nicht einheitlich. Vielmehr sind der Wert und die Polarität der Spannung abhängig von der Displaytechnologie, d.h. monochromer bzw. farbiger Anzeige und den aktuellen Werten von Größe bzw. Auflösung, und Liegen meist zwischen ±15V und ±30V. Die erfindungsgemäße Schaltung bietet nun den besonderen Vorteil, daß die für alle möglichen unterschiedlichen Display Typen notwendigen Werte für Kontrastspannungen bereitgestellt werden können. Diese sind sogar dem Betrag nach u.U. erheblich größer als die normalen Versorgungsspannung Ue bzw. VCC1 der Schaltung und eines Displays, welche üblicherweise bei von 3, 3,3 oder 5 Volt liegen.

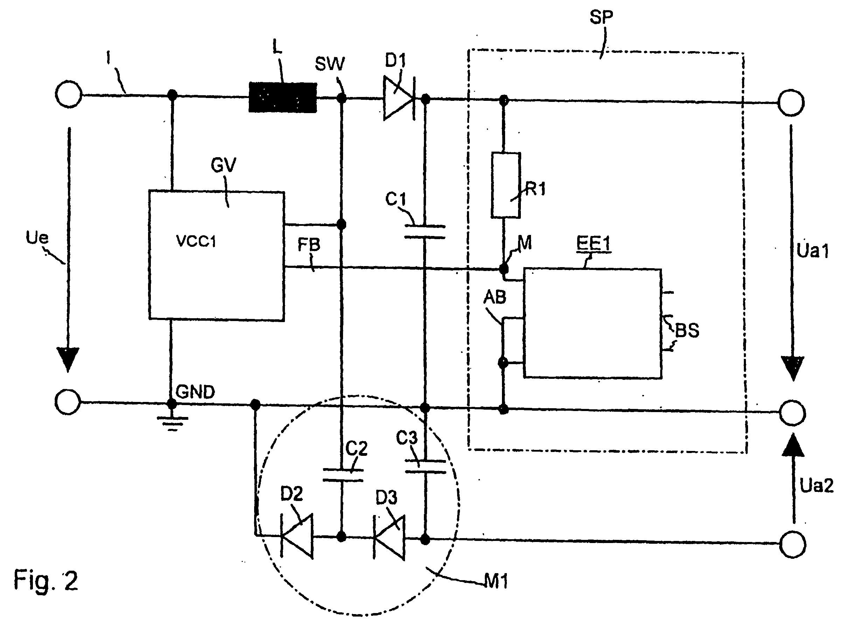

Mit der in Figur 1 darstellten Ausführung der erfindungsgemaßen Schaltung können positive, einstellbare Ausgangsgleichspannungen erzeugt werden. Mit einer besonders vorteilhaften Ergänzung der Schaltung können zusätzlich auch negative einstellbare Ausgangsgleichspannungen Ua2 erzeugt werden, obwohl es am Ausgang von handelsüblichen elektronischen Potentiometern an sich nicht möglich ist, negative Spannungen in einer notwendigen Größenordnungen zu erzeugen, wenn nur eine positiven Versorgungsspannung für das elektronischen Potentiometer zur Verfügung steht. Zur Lösung dieses Problems wird eine sogenannter kapazitiver Abgriff eingesetzt. Im Beispiel der Figur 2 ist eine derartige Schaltungsergänzung beispielhaft dargestellt. Dabei ist die Schaltung um einen aus den beiden Kondensatoren C2, C3 und den beiden Dioden D2, D3 bestehenden kapazitiven Abgriff M1 ergänzt. Die negative Ausgangsgleichspannung Ua2 folgt dabei dem Betrag nach der positiven Ausgangsgleichspannung Ua1. Die Schaltung von Figur 2 hat den Vorteil, daß mit Hilfe nur eines Schaltreglers GV und nur eines elektronischen Potentiometers EE1 sowohl eine positive und auch eine negative, auf einen vorgebbaren Wert regelbare Ausgangsgleichspannung Ua1, Ua2 gewonnen werden kann.

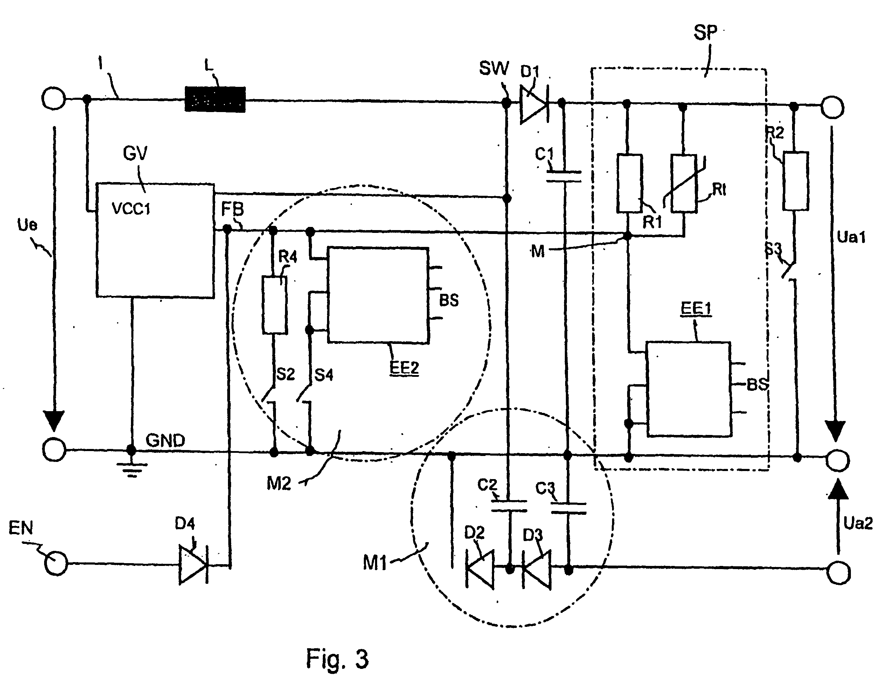

Weitere vorteilhafte Schaltungsergänzungen werden anhand der Schaltung von Figur 3 erläutert. Diese sind zwar prinzipiell nicht zwingend notwendig, ermöglichen aber eine auf den jeweiligen Anwendungsfall zugeschnittene Optimierung.

LCD Anzeigen erfordern in den meisten Fällen bestimmte Einschaltsequenzen der einzelnen Spannungen. Vielfach darf die Kontrastspannung erst dann freigegeben werden, nachdem die Versorgungsspannung stabil ansteht. Bei den Schaltungen in den Figuren 1 und 2 beginnt der Schaltregler GV bereits mit der Erzeugung einer Ausgangsgleichspannung Ua1 bzw. Ua2, sobald die Versorgungsspannung der Schaltung, des Displays und des Schaltreglers GV auf ca. den halben Wert angestiegen ist. Durch Ergänzung der Schaltung mit einer Diode D4 und eines auf den Meßwerteingang FB des Schaltreglers GV wirkenden Freigabesteuersignales EN läßt sich die als Kontrastspannung eingesetzte Ausgangsgleichspannung definiert einund ausschalten. Dies ist z.B. für Power-Management-Funktionen vorteilhaft. Solange das Freigabesteuersignal EN auf logisch '1' gehalten wird, ist der Schaltregler GV gesperrt. Erst wenn EN auf logisch 0 gesetzt wird, kann der Schaltregler GV über den Rückkopplungseingang FB wieder erkennen, ob die Ausgangsgleichspannung den notwendigen Wert hat und gegebenenfalls mit einer Taktung beginnen.

Aufgrund von Veränderungen der Umgebungstemperatur ist vielfach eine Korrektur des von der erfindungsgemäßen Schaltung bereitgestellten Ausgangsgleichspannungswertes notwendig. Dieser Fall tritt z.B. beim Einsatz der Schaltung als Generator für die Kontrastspannung einer LCD-Anzeige auf, wenn die Umgebungstemperatur an der Anzeige bzw. die Temperatur der Anzeige selbst sich im Laufe der Betriebszeit verändert. Zur Beseitigung dieses Problems ist im Beispiel der Figur 3 eine Temperaturkompensation in Form eines temperaturabhängigen Widerstandes Rt vorgesehen, welcher anstelle oder parallel zum Widerstand R1 im Spannungsteiler SP angeordnet ist. Bei der Verwendung der Ausgangsgleichspannung als Kontrastspannung einer LCD Anzeige wird dieser Varistor bevorzugt in deren unmittelbarer Nahe plaziert, und kann somit die Anzeigequalität beeinflussende Temperaturänderungen erfassen.

In der Schaltung von Figur 2 wird der Schaltregler GV durch Rückführung der positiven Ausgangsgleichspannung Ua1 vom Mittenpunkt M des Spannungsteilers SP gesteuert. Wird allerdings in einem besonderen Anwendungsfall an den Ausgang der Schaltung ein Verbraucher angeschlossen, z.B. ein LCD Display, welcher nur die negative Ausgangsgleichspannung Ua2 benötigt, kann folgendes Problem auftreten. Der Schaltregler GV stellt die Ausgangsgleichspannung Ua1 und damit zwangsläufig auch die komplementäre Ausgangsgleichspannung Ua2 in der gewünschten Höhe ein. Da aber keine Belastung der positiven Ausgangsgleichspannung Ua1 vorhanden ist und die Strömen über den Spannungsteiler SP sehr klein sind, wird die positive Ausgangsgleichspannung Ua1 nur langsam absinken. Der Schaltregler GV wird erst nach relativ langer Zeit wieder schalten und Ua1 nachregeln. Bei der negativen Ausgangsgleichspannung Ua2 wird aber wegen des angeschlossenen Verbrauchers wesentlich mehr Strom benötigt als über den Spannungsteiler SP fließt. Da durch die Verzögerung des Schaltvorganges nun eine verspätete Nachladung der negativen Ausgangsgleichspannung Ua2 über die Kondensatoren C2, C3 erfolgt, sinkt diese zwischenzeitlich stark ab. Dieses Absinken und Anheben der negativen Ausgangsgleichspannung äußert sich bei einem LCD Display als Verbraucher von Ua2 in Form eines "Pumpens" oder "Flackerns".

Dieser Effekt kann dadurch vermieden werden, daß bei einseitiger Belastung des negativen Ausgangs der Schaltung auf der Seite der positiven Ausgangsgleichspannung Ua1 ein ähnlich hoher Laststrom fließt wie auf der Seite der negativen Ausgangsgleichspannung Ua2. Hierdurch wird der Schaltregler GV auch zur ständigen Nachregelung der positiven Ausgangsgleichspannung veranlaßt und zwangsläufig ein unzulässig langes Absinken der negativen Ausgangsgleichspannung Ua2 vermieden. Im Beispiel der Figur 3 ist hierzu am Ausgang die Reihenschaltung aus einem Lastwiderstand R2 und einem Schaltelement S2 vorgesehen, so welche nur bei einseitiger Belastung der negativen Ausgangsgleichspannung Ua2 zugeschaltet wird.

Je nach Einsatz der erfindungsgemäßen Schaltung werden entweder Ausgangsgleichspannungen Ua1, Ua2 mit unterschiedlich großen Werten benötigt, oder es wird eine hoch auflösende Einstellbarkeit in einem bestimmten Spannungsbereich gefordert. Dient die Schaltung z.B. zur Bereitstellung der Kontrastspannung verschiedener LCD Displays, so müssen die Spannungswerte in ganz unterschiedlichen Bereichen liegen. Ein Monochrom-Display z.B. benötigt den Bereich um ca. -20 V, ein Farb-Display hingegen den Bereich um ca. +28V als optimalen Arbeitspunkt für die Kontrastspannung. Ferner führen z.B. bei einem LCD Display bereits kleine Schwankungen der Kontrastspannung ( > 0,5 V ) zu deutlichen Kontraständerungen. Der gesamte Regelbereich eines Displays liegt nur innerhalb von ca. 4 bis 5 V. Dieser Bereich sollte in kleinen Schritten durchlaufbar sein, um eine optimale Einstellung des Kontrasts zu ermöglichen. Hierzu wird bei der in Figur 3 dargestellten Ausführung der erfindungsgemäßen Schaltung durch zuschaltbare Parallelwiderstände M2 zwischen dem Mittenabgriffspunkt M des Spannungsteilers SP und dem Rückführeingang FB des Schaltreglers GV eine anwendungsabhängige Dimensionierung der erforderliche Spannungsbereiche von Ua1, Ua2 erreicht. So ist eine erste Parallelschaltung aus dem widerstand R4 und dem Schaltelement S1 vorhanden. Ein zuschaltbarer Widerstand kann vorteilhaft wiederum ein elektronisches Potentiometer sein. So ist im Biespiel der Figur 3 eine weitere Parallelschaltung aus einem zweiten elektronischen Potentiometer EE2 und einem Schalter S3 vorgesehen. Hiermit können innerhalb eines gewählten Spannungsbereiches die Werte der Ausgangsgleichspannungen Ua1, Ua2 hochauflösend feineingestellt werden.

## Patentansprüche

1. Schaltung zur Erzeugung mindestens einer einstellbaren Ausgangsgleichspannung (Ua1) mit einem über einer Eingangsgleichspannung (Ue) liegenden Wert, mit
a) einer die positiven Potentiale von Eingangs- und Ausgangsgleichspannung (Ue,Ua1) verbindenden Reihenschaltung aus einer Ladeinduktivität (L) und einer Diode (D1),
b) einer das positive Potential der Ausgangsgleichspannung (Ua1) mit dem Massebezugspunkt (GRD) verbindenden Parallelschaltung eines Speicherkondensators (C1) und eines Spannungsteilers (SP), und mit
c) einem Schaltregler (GV), dem die Spannung am Mittenpunkt (M) des Spannungsteilers (SP) an einen Meßwerteingang (FB) zugeführt wird und der den Verbindungspunkt (SW) zwischen Ladeinduktivität (L) und Diode (D1) getaktet zyklisch so häufig mit dem Massebezugspunkt (GRD) verbindet, bis die Ausgangsgleichspannung (Ua1) mit dem vorgegebenen Wert übereinstimmt (Fig.1)
**dadurch gekennzeichnet, dass**
d) ein Widerstand des Spannungsteilers (SP) durch ein zur Vorgabe eines aktuellen Wertes der Ausgangsgleichspannung (Ua1) dienendes elektronisches Potentiometer (EE1) gebildet ist, und
e) die Spannung am Mittenpunkt (M) des Spannungsteilers (SP) durch den Schaltregler (GV) auf für das elektronische Potentiometer (EE1) unschädliche Werte begrenzt wird.

2. Schaltung nach Anspruch 1, wobei durch einen kapazitiven Abgriff (D2, D3, C2, C3) zusätzlich eine mit der positiven Ausgangsgleichspannung (Ua1) betragsmäßig übereinstimmende negative Ausgangsgleichspannung (Ua2) gebildet wird.

3. Schaltung nach Anspruch 2, wobei in dem Fall eines nur die negative Ausgangsgleichspannung (Ua2) der Schaltung belastenden Verbrauchers ein Lastwiderstand (R2) an den die positive Ausgangsgleichspannung (Ua1) bereitstellenden Ausgang der Schaltung gelegt wird (S3).

4. Schaltung nach einem der vorangegangenen Ansprüche, wobei zur Freigabe bzw. Sperrung der Schaltung der mit dem Mittenpunkt (M) des Spannungsteilers (SP) verbundene Meßwerteingang (FB) des Schaltreglers (GV) über eine Diode (D4) mit einem logischen Null- bzw. einem Einssignal (EN) beaufschlagt wird.

5. Schaltung nach einem der vorangegangenen Ansprüche, wobei zur Nachführung des Wertes der Ausgangsgleichspannung (Ua1,Ua2) bei Veränderungen der Umgebungstemperatur bzw. der Betriebstemperatur eines die Ausgangsgleichspannung benötigenden Verbrauchers einem der Widerstände (R1,EE1) im Spannungsteiler (SP) ein temperaturabhängiger Widerstand (Rt) parallelgeschaltet ist.

6. Schaltung nach einem der vorangegangenen Ansprüche, wobei zur Einstellung des Bereiches der Ausgangsgleichspannungen (Ua1,Ua2) ein Parallelwiderstand (R4) zwischen den mit dem Mittenpunkt (M) des Spannungsteilers (SP) verbundenen Meßwerteingang (FB) des Schaltreglers (GV) und den Massebezugspunkt (GND) geschaltet (S2) wird.

7. Schaltung nach einem der vorangegangenen Ansprüche, wobei zur Feineinstellung der Ausgangsgleichspannungen (Ua1,Ua2) ein elektronisches Potentiometer (EE2) zwischen den mit dem Mittenpunkt (M) des Spannungsteilers (SP) verbundenen Meßwerteingang (FB) des Schaltreglers (GV) und den Massebezugspunkt (GND) geschaltet (S4) wird.

8. Schaltung nach einem der vorangegangenen Ansprüche, wobei die elektronischen Potentiometer (EE1,EE2) mit einem Steuerbus (BS) verbunden sind, worüber deren Wert programmgesteuert vorgebbar ist.

9. Verwendung einer Schaltung nach einem der vorangegangenen Ansprüche zur Steuerung der Kontrastspannung bei einer Flüssigkristallanzeigeeinheit.

## Claims

1. Circuit for generating at least one adjustable d.c. output voltage (Ua1) higher than a d.c. input voltage (Ue) with
a) a series circuit consisting of a charging inductor (L) and a diode (D1) and connecting the positive potentials of the d.c. input and output voltage (Ue,Ua1),
b) a parallel circuit which provided by a storage capacitor (C1) and a voltage divider (SP) and connecting the positive potential of the d.c. output voltage (Ua1) to ground (GRD) and with
c) a switching controller (GV) to which the voltage at the midpoint (M) of the voltage divider (SP) is routed to a measured-value input (FB) and which connects the connecting point (SW) between the charging inductor (L) and diode (D1) on a cyclically clocked basis for as many times to ground (GRD) until the d.c. output voltage (Ua1) tallies with the pre-defined value (Fig. 1)
**characterised in that**
d) a resistor of the voltage divider (SP) is formed by an electronic potentiometer (EE1) serving to specify a current value of the d.c. output voltage (Ua1) and
e) the voltage at the midpoint (M) of the voltage divider (SP) is limited by the switching controller (GV) to values that are non-damaging for the electronic potentiometer (EE1).

2. Circuit according to Claim 1 whereby a negative d.c. output voltage (Ua2) tallying in terms of its level with the positive d.c. output voltage (Ua1) is additionally formed by a capacitive tap (D2, D3, C2, C3).

3. Circuit according to Claim 2 whereby, when there is a consuming load only on the negative d.c. output voltage (Ua2) of the circuit, a load resistor (R2) is applied to the output of the circuit providing the positive d.c. output voltage (Ua1) (S3).

4. Circuit according to one of the preceding Claims whereby, in order to enable or, as the case may be, block the circuit, a logical '0' or, as the case may be, '1' signal (EN) is applied via a diode (D4) to the switching controller's (GV) measured-value input (FB) connected to the midpoint (M) of the voltage divider (SP).

5. Circuit according to one of the preceding Claims whereby, in order to re-align the value of the d.c. output voltage (Ua1,Ua2) in the event of changes in the ambient temperature or, as the case may be, operating temperature of a load requiring the d.c. output voltage, a temperature-dependent resistor (Rt) is connected in parallel with one of the resistors (R1,EE1) in the voltage divider (SP).

6. Circuit according to one of the preceding Claims whereby, in order to set the range of the d.c. output voltages (Ua1,Ua2), a parallel resistor (R4) is connected between the switching controller's (GV) measured-value input (FB) connected to the midpoint (M) of the voltage divider (SP) and ground (GND) (S2).

7. Circuit according to one of the preceding Claims whereby, in order to finely set the d.c. output voltages (Ua1,Ua2), an electronic potentiometer (EE2) is connected between the switching controller's (GV) measured-value input (FB) connected to the midpoint (M) of the voltage divider (SP) and ground (GND) (S4).

8. Circuit according to one of the preceding Claims whereby the electronic potentiometers (EE1,EE2) are connected to a control bus (BS) via which their value can be pre-defined on a program-controlled basis.

9. Application for a circuit according to one of the preceding Claims for controlling the contrast voltage for a liquid crystal display unit.

## Revendications

1. Circuit de production d'au moins une tension (Ua1) continue de sortie réglable, ayant une valeur au-dessus d'une tension (Ue) continue d'entrée, comprenant
a) un circuit série reliant les potentiels positifs de la tension (Ue, Ua1) continue d'entrée et de sortie et constitué d'une inductance (L) de charge et d'une diode (D1) ;
b) un circuit parallèle reliant le potentiel positif de la tension (Ua1) continue de sortie au point (GRD) de référence à la masse et constitué d'un condensateur (C1) d'emmagasinage et d'un diviseur (SP) de tension ; et comprenant
c) un régulateur (GV) de commutation, auquel est appliquée la tension au point (M) médian du diviseur (SP) de tension est appliquée à une entrée (FB) de valeur de mesure et qui relie le point (SW) de liaison entre l'inductance (L) de charge et la diode (D1) de manière cadencée cycliquement aussi souvent au point (GRD) de référence de masse qu'il le faut jusqu'à ce que la tension (Ua1) continue de sortie coïncide avec la valeur prescrite (Figure 1),
**caractérisé en ce que**
d) une résistance du diviseur (SP) de tension est formée par un potentiomètre (EE1) électronique servant à prescrire une valeur courante de la tension (Ua1) continue de sortie ; et
e) la tension au point (M) médian du diviseur (SP) de tension est limitée par le régulateur (GV) de commutation à des valeurs qui ne sont pas néfastes pour le potentiomètre (EE1) électronique.

2. Circuit suivant la revendication 1, dans lequel, par une prise (D2, D3, C2, C3) capacitive, on forme en plus une tension (Ua2) continue de sortie négative coïncidant en valeur absolue avec la tension (Ua1) continue de sortie positive.

3. Circuit suivant la revendication 2, dans lequel, dans le cas d'un appareil consommateur chargeant seulement la tension (Ua2) continue de sortie négative du circuit, une résistance (R2) de charge est appliquée (S3) à la sortie du circuit donnant la tension (Ua1) continue de sortie positive.

4. Circuit suivant l'une des revendications précédentes, dans lequel, pour libérer ou pour bloquer le circuit, l'entrée (FB) de valeur de mesure, qui est reliée au point (M) médian du diviseur (SP) de tension, du régulateur (GV) de commutation, est alimentée par l'intermédiaire d'une diode (D4) en un signal (EN) logique zéro ou un.

5. Circuit suivant l'une des revendications précédentes, dans lequel, pour asservir la valeur de la tension (Ua1, Ua2) continue de sortie, lorsque la température ambiante ou la température de fonctionnement d'un appareil utilisateur nécessitant la tension continue de sortie se modifie, une résistance (Rt), qui varie en fonction de la température, est montée en parallèle à l'une des résistances (R1, EE1) du diviseur (SP) de tension.

6. Circuit suivant l'une des revendications précédentes, dans lequel, pour régler l'intervalle des tensions (Ua1, Ua2) continues de sortie, il est monté une résistance (R4) en parallèle entre l'entrée (FB) de valeur de mesure, reliée au point (M) médian du diviseur (SP) de tension, du régulateur (GV) de commutation et le point (GND) de référence à la masse.

7. Circuit suivant l'une des revendications précédentes, dans lequel, pour le réglage fin des tensions (Ua1, Ua2) continues de sortie, il est monté un potentiomètre (EE2) électronique entre l'entrée (FB) de valeur de mesure, reliée au point (M) médian du diviseur (SP) de tension, du régulateur (GV) de commutation et le point (GND) de référence à la masse.

8. Circuit suivant l'une des revendications précédentes, dans lequel les potentiomètres (EE1, EE2) électroniques sont reliés à un bus (BS) de commande par lequel leur valeur peut être prescrite de manière programmée.

9. Utilisation d'un circuit suivant l'une des revendications précédentes pour commander la tension de contraste dans une unité d'affichage à cristaux liquides.
